# NOUVEAU FASCICULE DE BREVET EUROPEEN

(11) **EP 2 643 614 B2**
(45) Date de publication et mention de la décision concernant l'opposition: **13.03.2019**
(45) Mention de la délivrance du brevet: 27.01.2016
(21) Numéro de dépôt: 11790746.9
(22) Date de dépôt: 22.11.2011
(51) Int. Cl.: B64G 1/64, B64G 1/66, B64G 1/22, F16F 15/08

(54) **DISPOSITIF D'ISOLATION VIBRATOIRE**
SCHWINGUNGSISOLIERENDE VORRICHTUNG
VIBRATION ISOLATING DEVICE

(30) Priorité: 23.11.2010 FR 1004541
(43) Date de publication de la demande: 02.10.2013
(73) Titulaire: Airbus Defence and Space SAS, 78130 Les Mureaux (FR)
(72) Inventeur: LAURENS, Philippe, F-31290 Beauteville (FR)
(74) Mandataire: Ipside
(86) Numéro de dépôt international: PCT/EP2011/070705
(87) Numéro de publication internationale: WO 2012/069487

(56) Documents cités:
- DE-A1-102004 025 725
- FR-A1- 2 895 052
- FR-A1- 2 924 191
- JP-A- 59 065 640
- JP-A- 63 053 617
- US-A- 5 305 981
- US-A- 5 730 429
- US-A1- 2008 290 221
- THAYER D; ET AL: "Six-Axis Vibration Isolation System Using Soft Actuators and Multiple Sensors", Journal of Spacecraft and Rockets, vol. 39, March 2002 (2002-03), pages 206-212, XP001101438,
- Abu Hanieh A. et al: "Six-degree-of-freedom hexapods for active damping and active isolation of vibrations", Journal de Physique IV, vol. 12, no. 11, December 2002 (2002-12), pages 41-48, XP055322362,
- AHMED ABU HANIEH, Active Isolation and damping of vibrations via Stewart Platform, Doctor Thesis, April 2003
- ABU HANIEH, A. et al: "Piézoélectric Stewart Platform for general purpose active damping interface and precision control", 9th European Space Mechanisms and Tribology Symposium, 19-21 Sept. 2001,
- CRAWLEY E F et al: "USE OF PIEZOELECTRIC ACTUATORS AS ELEMENTS OF INTELLIGENT STRUCTURES", AIAA Journal, vol. 25, no. 10 , pages 1373-1385, XP009033514,

## Description

La présente invention concerne un dispositif d'isolation vibratoire. Elle vise plus particulièrement le domaine de l'isolation des micro-vibrations.

### Contexte de l'invention et problèmes posés

Certains satellites comportent des équipements générateurs de perturbations vibratoires qui peuvent être transmises par la structure à des éléments de charge utile sensibles à ces perturbations. Il s'agit d'isoler les équipements perturbateurs par des dispositifs adéquats servant à atténuer les vibrations qu'ils transmettent à la structure porteuse, et/ou d'isoler les éléments sensibles des perturbations générées en utilisant le même type de dispositifs.

Dans le domaine de l'isolation vibratoire d'équipements générateurs de perturbations ou d'éléments sensibles on connait actuellement plusieurs types de solutions.

Une première famille de solutions fait appel à des isolateurs passifs, c'est-à-dire inertes, et classiquement présentés sous forme de plots en élastomère, de lames, ressorts etc. De tels dispositifs sont efficaces vis-à-vis des perturbations hautes fréquences, mais sont inopérants sur les perturbations basses fréquences, qui risquent même d'être amplifiées dans certaines conditions (en particulier dans les bandes de fréquence proches des résonances de la suspension).

Alternativement, il est connu, notamment pour les équipements onéreux et très sensibles aux vibrations, de mettre en place des systèmes actifs, c'est-à-dire des dispositifs comportant d'une part un moyen de mesure des perturbations (forces ou accélérations) induites par les vibrations dans une bande de fréquences cible, et, d'autre part, des moyens de générer des actions correctives venant contrecarrer les effets perturbateurs induits. De cette manière, les vibrations transmises sont atténuées. Cependant, ces systèmes ne sont efficaces que dans un domaine limité de fréquences, caractérisé par la bande passante du contrôle actif.

Dans le cas d'une application plus spécifique à un équipement installé sur un satellite, l'état de l'art en matière d'isolation d'équipements perturbateurs fait appel à des éléments passifs, des éléments actifs, et des systèmes combinant un élément actif et un élément passif montés en parallèle ou en série.

On connait par exemple dans ce domaine des dispositifs de suspension combinant un élément passif de faible raideur (ressort, lames souples), et un élément actif monté en parallèle, celui-ci assurant un certain amortissement grâce à un actionneur sans contact (de type « voice coil » par exemple).

On connait également des dispositifs d'isolation purement passifs constitués par exemple de plots élastomère (brevets FR2895052 et FR 2924191), et des dispositifs d'isolation purement actifs constitués par exemple d'un hexapode de barres actives munies de senseurs et d'actionneurs piézoélectriques montés en série (publication « Technology Predevelopment for active control of vibration and very high accuracy pointing systems », A. Defendini and al, ESA's 4th Spacecraft Guidance, Navigation and Control Systems Conference, 1999).

Suivant l'état de l'art, on peut combiner ces deux types d'isolateurs en montant en série un hexapode de barres actives sur un isolateur passif à base d'élastomère. Dans un tel assemblage, les fonctions d'isolation sont physiquement séparées :
- une isolation passive est effectuée par des plots élastomère,
- un contrôle actif en série est réalisé par l'hexapode actif.

Au niveau de l'hexapode, des pivots mécaniques souples sont disposés suivant l'état de l'art à l'extrémité de chaque barre pour assurer les conditions d'isostaticité requises pour éliminer tout chemin mécanique indésirable permettant la transmission en parallèle des vibrations.

Une des difficultés majeures inhérentes à cette conception provient de ce besoin de conditions isostatiques au sein du treillis actif. Les solutions retenues classiquement mettent en jeu des éléments mécaniques (lames, pivots micro-usinés, membranes métalliques, etc), avec à chaque fois un antagonisme à résoudre entre les deux besoins contradictoires suivants :
- la réalisation d'une raideur de flexion la plus petite possible de façon à se rapprocher de conditions isostatiques,
- la tenue des contraintes mécaniques en traction-compression afin de résister à la phase de lancement qui produit des contraintes élevées.

Il est en effet connu que la réalisation de pivots souples adaptés à supporter les charges mécaniques liées au lancement est très difficile.

Ce type de dispositif d'isolation à la fois passive et active par superposition d'éléments connus présente certaines limitations. Tout d'abord, le dispositif ne permet pas une intégration optimisée des différents éléments nécessaires à l'isolation du fait que les fonctions d'isolation sont séparées physiquement. D'autre part, il ne permet pas une réalisation facile de pivots flexibles assurant les conditions d'isostaticité requises.

Un autre exemple est connu du document JP63053617.

### Objectifs de l'invention

L'objectif de la présente invention est de proposer un dispositif d'isolation vibratoire intégrant et combinant de façon optimisée des fonctions d'isolation passive et active, et réalisant simultanément les conditions d'isostaticité mécanique requises au niveau de l'élément actif.

### Exposé de l'invention

A cet effet, l'invention vise un dispositif d'isolation vibratoire adapté à être placé entre une structure porteuse et une platine sur laquelle est fixée un équipement. Dans un premier cas d'utilisation, l'équipement est un élément perturbateur qui génère des vibrations. Le dispositif doit atténuer les vibrations transmises vers la structure. Dans un second cas d'utilisation, l'équipement est un élément sensible aux vibrations. Le dispositif doit atténuer au niveau de l'équipement sensible les vibrations générées par un élément perturbateur disposé sur la structure porteuse, ces vibrations se propageant par la structure jusqu'à l'équipement.

Le dispositif comprend un treillis constitué de barres, chaque barre comportant au moins un actionneur axial, au moins un embout de chaque barre étant constitué d'un élément en matériau élastomère (dit élément élastomère).

Si les barres n'ont qu'un seul embout en élastomère, les embouts sont tous disposés du même côté (au plus près de ladite structure ou au plus près de ladite platine).

Avantageusement, les deux embouts de chaque barre sont constitués d'éléments élastomère.

En d'autres termes, l'invention vise un dispositif hybride actif/passif d'isolation des micro-vibrations, constitué d'un treillis à barres actives dont les embouts sont des plots élastomères.

Selon un mode de réalisation, le treillis est un hexapode actif comportant six barres d'isolation identiques formant un treillis régulier.

Les éléments élastomères sont préférentiellement dimensionnés de manière à assurer une fonction de filtrage passif dans une bande de fréquences prédéterminée pour un équipement perturbateur de caractéristiques connues.

Par exemple, les éléments élastomères des barres sont calculés en matériau, forme et dimensions de manière à ce que leurs raideurs en translation (axiale et radiale) permettent d'assurer une fonction de filtrage passif dans une bande de fréquence prédéterminée.

Les éléments élastomères des barres sont également préférentiellement calculés en matériau, forme et dimensions de manière à ce que leurs raideurs en flexion soient négligeables, de façon à assurer une fonction de rotulage des barres.

Ainsi, dans cette architecture, les éléments en matériau élastomère ont une double fonction :
- assurer le filtrage passif, par introduction d'une flexibilité en série, de valeur maîtrisée (simple ou double étage d'isolation passive, suivant que les barres ont un seul embout, ou les deux embouts en élastomère),
- mais également résoudre le problème d'isostaticité du treillis de barres, en libérant les degrés de liberté de rotation à au moins une emplanture (rotulage souple).

Dans un mode de réalisation possible, ces éléments élastomères se présentent sous forme d'une membrane en forme de calotte hémisphérique.

Alternativement, les éléments élastomères peuvent également se présenter sous forme de plots de forme cylindrique. D'autres types de géométries sont également envisageables, en fonction des contraintes spécifiques à chaque application (essentiellement les fréquences de filtrage selon les six degrés de liberté, la masse et l'inertie de la partie suspendue, les éventuelles contraintes d'aménagement et d'interface, etc.).

Afin de réaliser l'isolation active, le dispositif comporte en outre au moins un senseur mesurant les effets des perturbations :
- Dans le cas d'un dispositif dont la platine porte un équipement perturbateur, au moins un senseur est utilisé pour mesurer les efforts perturbateurs transmis vers la structure porteuse. Dans un mode de réalisation avantageux, au moins un tel senseur est un capteur de force, disposé en série dans le chemin de transmission des vibrations entre l'actionneur des barres et la structure.
- Dans le cas d'un dispositif dont la platine porte un équipement sensible aux vibrations, au moins un senseur mesurant les effets des perturbations est disposé sur la platine. Dans un mode de réalisation avantageux, un tel senseur est un capteur accélérométrique.

Fonctionnellement, on combine ainsi un isolateur élastomère passif simple ou double étage avec un contrôle actif agissant sur l'ensemble des degrés de liberté.

Selon un mode de réalisation avantageux, le dispositif comporte des moyens de limiter la course de l'équipement perturbateur par rapport à la structure sur les trois axes, en translation et en rotation, ces moyens travaillant en parallèle avec l'hexapode, en se reprenant sur l'équipement perturbateur suspendu.

Dans ce cas, dans une mise en oeuvre favorable, ce dispositif comporte un ensemble de mâchoires entre lesquelles viennent prendre place des ergots solidarisés à la platine supérieure, des butées en élastomère fixées sur les surfaces internes des mâchoires, venant limiter la course possible des ergots.

Selon un mode de réalisation avantageux, le dispositif comporte un dispositif de contrôle actif qui reboucle l'information mesurée par au moins un senseur sur la commande en force des actionneurs axiaux des barres.

Un organe de calcul (processeur, ASIC, FPGA, etc.) sera utilisé pour calculer suivant un algorithme établi les ordres de commandes en force des actionneurs à partir des mesures fournies par le ou les senseurs.

Une option de réalisation de l'algorithme consiste à mettre en oeuvre un contrôle de type « large bande ».

Selon un autre mode de réalisation, le dispositif comporte un dispositif de contrôle actif utilisant un contrôle bande étroite, de type antiphase.

### Brève description des figures

La description qui va suivre, donnée uniquement à titre d'exemple d'un mode de réalisation de l'invention, est faite en se référant aux figures annexées qui illustrent :
- figure 1 : une vue de dessus d'un exemple d'implantation d'un isolateur actif / passif tel que décrit,
- figure 2a : une vue de côté d'une barre d'isolation utilisée dans un isolateur, avec capteur monté à l'embase de la barre,
- figure 2b : une vue de côté d'une barre d'isolation utilisée dans un isolateur, avec capteur monté sur la platine,
- figure 3 : un schéma simplifié d'implantation des butées pour le lancement,
- figure 4 : des courbes de performance théoriques de réjection sans et avec contrôle actif.

### Description détaillée d'un mode de réalisation de l'invention

Dans un premier type d'application, le dispositif d'isolation de vibrations selon l'invention est disposé entre un équipement générateur de vibrations dans une gamme de fréquences et d'amplitudes préalablement connues, et une structure, que l'on souhaite isoler desdites vibrations.

Dans un second type d'application, le dispositif d'isolation de vibrations selon l'invention est disposé entre un équipement sensible aux vibrations et une structure qui propage les vibrations générées par un équipement perturbateur.

Dans les deux cas, la partie mécanique du dispositif est la même. Des adaptations de la partie active du dispositif peuvent être mises en oeuvre pour optimiser l'utilisation du dispositif selon le cas d'application.

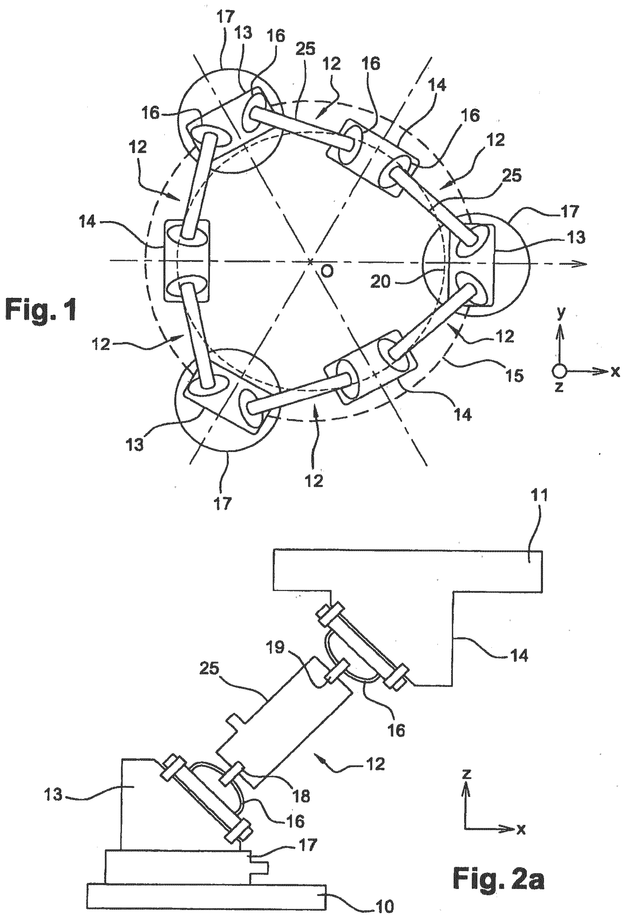

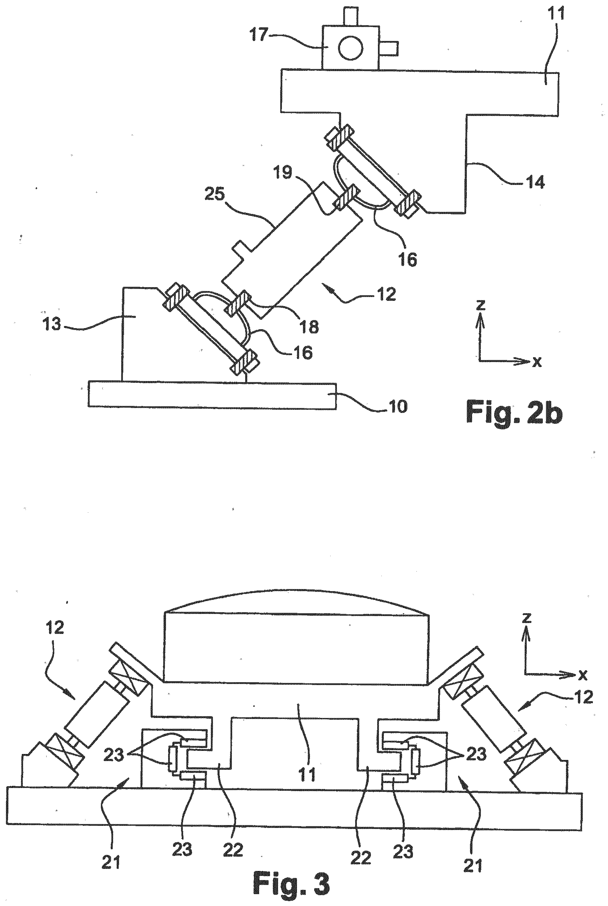

Dans le présent exemple nullement limitatif, le dispositif d'isolation de vibrations se présente sous la forme d'un hexapode disposé entre une structure 10, et une platine 11 supportant l'équipement (voir figure 2a dans le cas d'un élément perturbateur, figure 2b dans le cas d'un élément sensible).

Un tel hexapode est notamment utilisé pour séparer une première surface portant un instrument d'une seconde surface qui est un élément de la structure d'un satellite.

L'hexapode comporte six barres 12 disposées de telle façon que le contrôle des efforts en traction-compression dans chacune des six barres 12 permette le contrôle de six degrés de liberté indépendants en forces et couples à l'interface entre la structure et l'équipement, de façon à réaliser une isolation efficace suivant tous les degrés de liberté du système.

De façon arbitraire, l'extrémité des barres 12 fixée à la platine 11 sera appelée extrémité supérieure 19, et celle fixée sur la structure 10 sera appelée extrémité inférieure 18.

Dans ce montage particulier, les six barres 12 sont identiques. Les points d'attache des extrémités supérieures des barres 12 forment trois couples de points disposés dans un même plan, au voisinage des sommets d'un triangle équilatéral. De même pour les points d'attache des extrémités inférieures. Les plans des points d'attache respectivement inférieurs et supérieurs sont parallèles. Le triangle correspondant aux points d'attache inférieurs se déduit du triangle correspondant aux points d'attache supérieurs par une rotation de 60 degrés et une translation d'un plan à l'autre. Les axes de chaque couple de barres 12 successives sont sensiblement concourants deux à deux.

On définit pour la suite de la description un axe dit vertical Z, qui est l'axe principal de l'hexapode, ici perpendiculaire aux plans de pose du dispositif sur la structure 10 et à la platine 11 porte équipement. Deux axes dits horizontaux X et Y, parallèles au plan des points d'attache respectivement supérieurs et inférieurs des barres 12, et perpendiculaires à l'axe vertical Z et entre eux, complètent un repère orthonormal.

Comme on le voit sur les figures 1, 2a et 2b, l'hexapode comporte six barres d'isolation 12 identiques formant un treillis régulier.

Chaque barre 12, de forme sensiblement cylindrique, comporte un élément actif solidaire de la partie purement structurale de la barre.
Selon l'invention, l'élément actif est constitué d'un translateur piézoélectrique 25. De tels translateurs piézoélectriques 25 sont disponibles dans le commerce et connus de l'homme du métier.

A chaque extrémité 18, 19 de chaque barre 12, est disposé un élément élastomère 16, ces éléments élastomères 16 constituant les embouts des barres 12. Ces douze éléments élastomères 16 sont calculés en matériau, forme et dimensions de manière à assurer simultanément une fonction de filtrage passif dans une gamme de fréquences prédéterminée, et une fonction de rotulage des barres devant assurer l'isostaticité du montage.

Chaque élément élastomère 16 de chaque barre 12 est calculé en matériau, forme et dimensions de manière à ce que ses raideurs en flexion soient significativement plus faibles (typiquement au moins un ordre de grandeur plus faibles) que les raideurs correspondantes de la partie rigide desdites barres.

La fonction de filtrage passif suivant les six degrés de liberté en forces et couples entre la platine 11 portant l'équipement et la structure 10 porteuse est déterminée au premier ordre par les matrices de raideur et d'amortissement (toutes deux de dimension six) du treillis et des éléments élastomère 16, les barres 12 étant considérées passives. Les souplesses étant localisées exclusivement au niveau des éléments élastomère 16, on dispose de tous les degrés de liberté nécessaires pour obtenir le profil de filtrage fréquentiel désiré, en jouant sur les raideurs en translations différentielles des éléments élastomère 16 et sur la géométrie du treillis.

De façon plus fine, on sera amené à modéliser et caractériser le comportement modal de cette structure passive, de façon à déterminer les profils de filtrage (fonctions de transfert en forces et couples) et vérifier qu'ils satisfont bien les exigences liées à la nature et aux caractéristiques de l'équipement isolé.

Dans le présent exemple, les éléments élastomères 16 se présentent sous forme d'une membrane en forme de calotte hémisphérique. Il s'agit ici également d'éléments connus de l'homme du métier, dimensionnés pour la réjection d'une bande de fréquences prédéterminée, par exemple au dessus de 20 Hz. Pour un matériau donné, les paramètres d'optimisation peuvent être par exemple le diamètre et l'épaisseur de la calotte hémisphérique.

L'utilisation d'éléments élastomères 16 en forme de plots cylindriques (non représentés sur les figures) conduirait à optimiser des paramètres comme la longueur et le diamètre des plots. Plus généralement, la géométrie optimale des éléments élastomère 16 est à déterminer en fonction des besoins et des contraintes propres à chaque application.

Chaque barre 12 est reliée mécaniquement, par l'intermédiaire de l'élément élastomère 16, en son extrémité inférieure 18 à un bloc inférieur 13, et en son extrémité supérieure 19 à un bloc supérieur 14. De cette manière, les six barres 12 se reprennent sur des blocs inférieurs 13 et supérieurs 14 rigides qui assurent la géométrie de l'ensemble (positionnement des barres, inclinaison etc.).

Les éléments élastomères 16 sont choisis de manière à présenter une raideur négligeable en flexion, propre à assurer que chaque élément élastomère 16 se comporte ici comme un pivot de la barre 12 sur le bloc de support 13, 14 associé.

Les blocs inférieurs 13 sont disposés sur un cercle inférieur 15 sur la structure 10. De même, les blocs supérieurs 14 sont disposés sur un second cercle 20 sur la platine 11. Les blocs supérieurs 14 sont décalés angulairement de 60° par rapport aux blocs inférieurs 13.

Les blocs inférieurs 13 sont montés sur trois senseurs de force 17 mesurant chacun les efforts suivant trois axes perpendiculaires. Ce sont par exemple des capteurs piézoélectriques de type connu en soi. La fonction de ces senseurs de force 17 est de mesurer le torseur complet transmis à l'interface par l'équipement générateur de vibration de manière à permettre le calcul et la mise en oeuvre de la commande active des actionneurs piézoélectriques. Cette mesure est réalisée par des moyens connus de l'homme de l'art.

En variante, les senseurs de force 17 peuvent être disposés entre les éléments élastomère 16 inférieurs des barres 12 et les blocs inférieurs 13. Dans ce cas, chaque senseur de force 17 mesure l'effort transmis suivant l'axe de la barre 12 correspondante.

La structure dont il est question dans le présent exemple nullement limitatif est destinée à être embarquée sur un satellite, et donc à supporter les charges mécaniques résultant du lancement, puis à fonctionner dans un environnement à gravité nulle.

En vue de prendre en compte la question de la tenue au lancement du dispositif d'isolation vibratoire, il est connu classiquement que pour des isolateurs élastomère, donc de type passif, chaque module intègre ses propres butées, qui permettent de limiter la course et les contraintes dans les plots élastomère de la suspension.

Ce type d'intégration n'est pas réalisable avec les barres combinées telles que décrites dans le présent exemple.

De ce fait, on utilise, dans le présent exemple, un dispositif de limitation de course de l'hexapode. Celui-ci est utilisé lors du lancement du satellite, ledit lancement étant supposé ici créer une accélération selon l'axe vertical Z de haut en bas.

Ce dispositif de limitation de course travaille en parallèle avec l'hexapode, en se reprenant sur l'équipement perturbateur suspendu (ou sur la platine 11 porte-équipements).

Comme on le voit à la figure 3, ce dispositif comporte un ensemble de mâchoires 21 entre lesquelles viennent prendre place des ergots 22 solidarisés à la platine supérieure 11. Des butées en élastomère 23 sont fixées sur les surfaces internes des mâchoires 21, et viennent donc limiter la course possible des ergots 22, tant verticalement que latéralement. Ces butées sont de type connu de l'homme de l'art.

Dans le présent exemple de mise en oeuvre, le dispositif de limitation de course comporte trois mâchoires 21 disposées angulairement à 120° les unes des autres dans le plan horizontal, de manière à limiter la course de l'équipement perturbateur par rapport à la structure sur les trois axes, en translation ou en rotation.

Le dimensionnement des ergots 22, mâchoires 21 et butées en élastomère 23, et le choix de leurs matériaux de fabrication sont notamment liés à la masse de l'équipement perturbateur, et aux contraintes mécaniques du lancement.

Les mâchoires 21 sont par ailleurs dimensionnées de telle manière que l'espace entre les butées en élastomère 23 et les ergots 22 , en conditions de vol orbital, est toujours supérieur à l'amplitude maximale des vibrations que doit amortir le dispositif d'isolation objet de l'invention. En d'autres termes, les jeux de ces butées en élastomère 23 sont déterminés de façon à limiter les chocs au lancement tout en ne perturbant pas le fonctionnement nominal du dispositif d'isolation vibratoire en conditions opérationnelles.

Les tolérances de déformation des éléments élastomère 16 des barres de l'hexapode (faisant office d'éléments isolateurs et de pivot) sont bien plus grandes que celles d'éléments mécaniques (lames, membranes métalliques) exerçant une fonction de pivot équivalente, et permettent cette solution de reprise par des butées en élastomère secondaires 23, avec des matériaux élastomère plus durs.

Dans le présent exemple, le dispositif de contrôle actif (non illustré sur les figures) utilise l'information du torseur mesuré par les senseurs de force 17 au niveau des blocs de support inférieurs 13, pour élaborer la commande en force des translateurs piézoélectriques 25 des six barres 12.

Dans une première variante, un contrôle de type « large bande » est mis en oeuvre. Une loi de contrôle boucle fermée multivariable est élaborée de façon classique à partir de la matrice de transfert entre les forces délivrées par les translateurs piézoélectriques 25 et les mesures des senseurs 17 utilisés. Cette loi de contrôle peut être implantée en tant qu'algorithme dans un moyen de calcul (non représenté sur les figures) destiné à envoyer des ordres de commande aux translateurs piézoélectriques 25. Cette solution s'applique en théorie à tous les types de perturbations, mais présente une efficacité a priori moindre sur des équipements produisant un spectre de vibrations harmoniques.

Aussi, dans une deuxième variante, un contrôle bande étroite, de type antiphase, est mis en oeuvre. Cette solution est particulièrement adaptée à un équipement perturbateur générant une ou deux raies harmoniques, à des fréquences fixes ou lentement variables (roues tournant à vitesse élevée, actionneurs gyroscopiques, cryo-générateurs, etc.).

### Avantages de l'invention

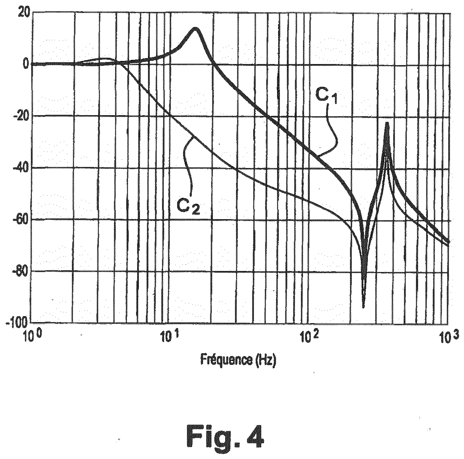

La figure 4 est un diagramme de Bode qui met en évidence une performance théorique atteignable en boucle fermée en large bande avec ce dispositif. Sur cette figure 4, l'axe des abscisses représente la fréquence, et l'axe des ordonnées l'atténuation de la force perturbatrice (mesurée en dB), selon un des axes de l'isolateur. La courbe supérieure C1 correspond au cas d'une isolation purement passive, de type classique. La courbe inférieure C2 représente l'atténuation observée avec un dispositif combinant isolation active et passive conformément à l'invention.

On note que les calculs servant à cette représentation ont été effectués sur un système simplifié à un seul degré de liberté.

On observe l'effet combiné du filtrage passif par les éléments élastomère 16, qui rejettent les perturbations hautes fréquences, alors que la boucle active mise en oeuvre par les translateurs piézoélectriques 25 des barres 12, permet de réduire la surtension de l'isolateur, et d'apporter du gain supplémentaire aux fréquences intermédiaires. On note un gain significatif entre 5 et 200 Hz, avec un gain de plus de 20 dB entre 10 et 100 Hz.

La remontée observée sur la courbe vers 350 Hz correspond ici à un mode propre de l'équipement suspendu, pris en compte dans la conception de la loi de contrôle (contraintes de stabilité).

Les améliorations qu'apporte ce concept par rapport à l'état de l'art sont les suivantes :
- la réalisation d'un double étage d'isolation passive, par la mise en série de deux jeux d'éléments élastomère 16, 23;
- l'intégration des fonctions passives et actives, par montage des éléments élastomère 16 dans la barre active 12 en série de part et d'autre des translateurs piézoélectriques 25 ;
- le double rôle des éléments élastomère 16 de l'hexapode, qui assurent à la fois une fonction d'isolation passive et une fonction de pivot souple ;
- la possibilité de réaliser un système relativement simple de reprise au lancement par l'intermédiaire de butées élastomère 23.

L'architecture de l'invention la rend facilement applicable aux deux types de problèmes d'isolation, à savoir :
- isolation d'une source perturbatrice, de façon à minimiser les efforts parasites transmis à la structure porteuse,
- isolation d'un équipement sensible en réduisant l'effet des perturbations induites par la structure porteuse.

Dans le premier cas, on utilisera de façon préférentielle comme senseur 17 des capteurs de force positionnés en série entre la structure 10 porteuse à l'isolateur ; dans le second cas, on utilisera de façon préférentielle comme senseurs 17 des capteurs accélérométriques positionnés à côté de l'équipement sensible, sur la platine 11 supérieure du dispositif d'isolation (voir figure 2b).

Par ailleurs, la solution décrite dans la présente invention permet de simplifier la conception des pivots et de reprise des efforts au lancement, en intégrant des solutions élastomère avec butées 23 en parallèle.

On comprend que le choix qui a été fait, dans le dispositif décrit, d'un hexapode comportant des pivots, matérialisés par les éléments élastomères 16, aux extrémités de chaque barre 12 permet de maintenir des conditions de montage isostatique entre la structure et l'équipement perturbateur.

Dans le cas de montage d'éléments élastomères 16 aux deux extrémités des barres 12, le dispositif présente l'avantage supplémentaire d'un double étage d'isolation passive, qui améliore les performances de réjection en haute fréquence.

### Variantes de l'invention

La portée de la présente invention ne se limite pas aux détails des formes de réalisation ci-dessus considérées à titre d'exemple, mais s'étend au contraire aux modifications à la portée de l'homme de l'art.

Par exemple, le treillis de barres 12 actives peut être différent d'un hexapode régulier comme celui décrit ici. Il est cependant avantageux d'avoir toujours un treillis de six barres 12 permettant d'isoler les perturbations suivant les six degrés de liberté à l'interface entre la platine 11 portant l'équipement et la structure 10 porteuse.

Les barres 12 actives peuvent n'avoir qu'un seul embout en élastomère. Dans ce cas, tous les embouts doivent se trouver d'un même côté des barres 12, soit dans leur partie supérieure (la plus proche de la platine 11), soit dans leur partie inférieure (la plus proche de la structure 10).

L'interface mécanique entre le treillis de barres 12 et la structure 10 a été présentée sous la forme de trois blocs inférieurs 13 sur lesquels sont fixées les extrémités inférieures 18 des barres 12. Cependant, d'autres réalisations sont possibles, comme par exemple l'utilisation d'une seule pièce sensiblement cylindrique sur laquelle viendraient se fixer les dites extrémités inférieures 18. Dans ce cas, les senseurs de force 17 seraient placés en série dans le chemin de transmission des vibrations entre l'actionneur 25 de chaque barre 12 et ladite pièce cylindrique, avantageusement entre la base de l'élément élastomère 16 et son point de fixation sur ladite pièce.

## Revendications

1. Dispositif d'isolation vibratoire adapté à être placé entre une structure (10), et une platine (11) porte équipement, ledit dispositif comprenant un treillis constitué de barres, chaque barre comportant au moins un actionneur axial (25), le treillis étant un hexapode actif comportant six barres (12) identiques disposées selon une géométrie régulière, les six barres (12) étant disposées de telle façon que le contrôle des efforts en traction-compression dans chacune des six barres (12) permette le contrôle de six degrés de liberté indépendants en forces et couples à l'interface entre la structure et l'équipement, de façon à réaliser une isolation efficace suivant tous les degrés de liberté du système,
**caractérisé en ce qu'**au moins un embout de chaque barre est constitué d'un élément (16) en matériau élastomère dit élément élastomère et **en ce que** chaque actionneur axial est un translateur piézoélectrique.

2. Dispositif selon la revendication 1, **caractérisé en ce que** lesdites barres ont un seul embout en élastomère, et tous les embouts sont disposés du même côté au plus près de la structure (10) ou au plus près de la platine (11).

3. Dispositif selon la revendication 1, **caractérisé en ce que** les deux embouts de chaque barre (12) sont constitués d'éléments élastomères (16).

4. Dispositif selon l'une quelconque des revendications 1 à 3, **caractérisé en ce que** les éléments élastomères (16) sont dimensionnés de manière à assurer une fonction de filtrage passif dans une bande de fréquences prédéterminée.

5. Dispositif selon l'une quelconque des revendications 1 à 4, **caractérisé en ce que** chaque élément élastomère (16) de chaque barre (12) est calculé en matériau, forme et dimensions de manière à ce que ses raideurs en flexion soient significativement plus faibles typiquement au moins un ordre de grandeur plus faibles que les raideurs correspondantes de la partie rigide desdites barres.

6. Dispositif selon l'une quelconque des revendications 1 à 5, **caractérisé en ce que** ces éléments élastomères (16) se présentent sous forme d'une membrane en forme de calotte sphérique.

7. Dispositif selon l'une quelconque des revendications 1 à 5, **caractérisé en ce que** ces éléments élastomères (16) se présentent sous forme de plots de forme cylindrique.

8. Dispositif selon l'une quelconque des revendications 1 à 7, **caractérisé en ce qu'**il comporte au moins un senseur (17) permettant de mesurer les effets d'efforts perturbateurs transmis vers la structure (10).

9. Dispositif selon la revendication 8, adapté au cas où la structure (10) est destinée à porter un équipement perturbateur, **caractérisé en ce qu'**au moins un senseur (17) mesurant les effets d'efforts perturbateurs est disposé en série dans le chemin de transmission des vibrations entre l'actionneur (25) des barres (12) et la structure (10).

10. Dispositif selon la revendication 9, **caractérisé en ce que** ledit au moins un senseur (17) est un capteur de force.

11. Dispositif selon la revendication 8, adapté au cas où la structure (10) est destinée à porter un équipement sensible aux vibrations, **caractérisé en ce qu'**au moins un senseur (17) mesurant les effets d'efforts perturbateurs est disposé sur la platine (11).

12. Dispositif selon la revendication 11, **caractérisé en ce que** ledit au moins un senseur (17) est un capteur accélérométrique.

13. Dispositif selon l'une quelconque des revendications 1 à 12, **caractérisé en ce qu'**il comporte des moyens de limiter la course de l'équipement par rapport à la structure (10) en translation ou en rotation, ces moyens travaillant en parallèle avec l'hexapode.

14. Dispositif selon l'une quelconque des revendications 1 à 13, **caractérisé en ce qu'**il comporte un dispositif de contrôle actif qui reboucle l'information mesurée par au moins un senseur (17), sur la commande des actionneurs axiaux (25) des barres (12).

## Patentansprüche

1. Schwingungsisolierende Vorrichtung, die geeignet ist, zwischen einer Struktur (10) und einer Gerätetragplatte (11) angebracht zu werden, wobei die Vorrichtung ein Gitterwerk aufweist, das aus Stäben gebildet ist, wobei jeder Stab mindestens einen axialen Aktuator (25) aufweist, wobei das Gitterwerk ein aktiver Hexapod ist, der sechs identische Stäbe (12) aufweist, die gemäß einer regelmäßigen Geometrie angeordnet sind, wobei die sechs Stäbe (12) derart angeordnet sind, dass die Kontrolle der Zug- und Druckkräfte in jedem der sechs Stäbe (12) die Kontrolle von sechs unabhängigen Freiheitsgraden von Kräften und Momenten an der Schnittstelle zwischen der Struktur und des Geräts ermöglicht, um eine effiziente Isolierung in allen Freiheitsgraden des Systems zu erstellen,
**dadurch gekennzeichnet, dass** mindestens ein Anschlussstück von jedem Stab aus einem Element (16) aus einem Elastomermaterial, dem sogenannten elastomeren Element, gebildet ist, und dass jedes axiale Aktuator ein piezoelektrischer Translator ist.

2. Vorrichtung nach Anspruch 1, **dadurch gekennzeichnet, dass** die Stäbe ein einziges Anschlussstück aus Elastomer aufweisen, und alle Anschlussstücke auf der gleichen Seite näher an der Struktur (10) oder näher an der Platte (11) angeordnet sind.

3. Vorrichtung nach Anspruch 1, **dadurch gekennzeichnet, dass** die zwei Anschlussstücke von jedem Stab (12) aus elastomeren Elementen (16) gebildet sind.

4. Vorrichtung nach einem der Ansprüche 1 bis 3, **dadurch gekennzeichnet, dass** die elastomeren Elemente (16) dimensioniert sind, um eine passive Filterfunktion in einem vorbestimmten Frequenzbereich zu gewährleisten.

5. Vorrichtung nach einem der Ansprüche 1 bis 4, **dadurch gekennzeichnet, dass** jedes elastomere Element (16) von jedem Stab (12) in Material, Form und Abmessungen derart berechnet ist, dass seine Biegesteifigkeiten erheblich niedriger, typischerweise um mindestens eine Größenordnung niedriger als die entsprechenden Steifigkeiten des starren Teils der Stäbe sind.

6. Vorrichtung nach einem der Ansprüche 1 bis 5, **dadurch gekennzeichnet, dass** die elastomeren Elemente (16) in Form einer kugelkalottenförmigen Membran ausgebildet sind.

7. Vorrichtung nach einem der Ansprüche 1 bis 5, **dadurch gekennzeichnet, dass** diese elastomeren Elemente (16) in Form von Kuppen mit zylindrischer Form ausgebildet sind.

8. Vorrichtung nach einem der Ansprüche 1 bis 7, **dadurch gekennzeichnet, dass** sie mindestens einen Sensor (17) aufweist, der es ermöglicht, die Auswirkungen der Störkräfte zu messen, die auf die Struktur (10) übertragen werden.

9. Vorrichtung nach Anspruch 8, die für den Fall geeignet ist, in dem die Struktur (10) dazu bestimmt ist, ein Störgerät zu tragen, **dadurch gekennzeichnet, dass** mindestens ein Sensor (17), der die Auswirkungen der Störkräfte misst, in Serie in dem Schwingungsübertragungsweg zwischen dem Aktuator (25) der Stäbe (12) und der Struktur (10) angeordnet ist.

10. Vorrichtung nach Anspruch 9, **dadurch gekennzeichnet, dass** der mindestens eine Sensor (17) ein Kraftsensor ist.

11. Vorrichtung nach Anspruch 8, die für den Fall geeignet ist, in dem die Struktur (10) dazu bestimmt ist, ein schwingungsempfindliches Gerät zu tragen, **dadurch gekennzeichnet, dass** mindestens ein Sensor (17), der die Auswirkungen der Störkräfte misst, auf der Platte (11) angeordnet ist.

12. Vorrichtung nach Anspruch 11, **dadurch gekennzeichnet, dass** der mindestens eine Sensor (17) ein Beschleunigungsmesssensor ist.

13. Vorrichtung nach einem der Ansprüche 1 bis 12, **dadurch gekennzeichnet, dass** sie Mittel zur Begrenzung des Translations- oder Rotationswegs des Gerätes gegenüber der Struktur (10) aufweist, wobei diese Mittel parallel mit dem Hexapod funktionieren.

14. Vorrichtung nach einem der Ansprüche 1 bis 13, **dadurch gekennzeichnet, dass** sie eine aktive Kontrollvorrichtung aufweist, die die Informationen, die von mindestens einem Sensor (17) gemessen sind, zu der Steuerung der axialen Aktuatoren (25) der Stäbe (12) zurückschleift.

## Claims

1. Vibration isolating device designed to be placed between a structure (10) and an equipment mounting plate (11), said device comprising a lattice made up of bars, each bar having at least one axial actuator (25), the lattice being an active hexapod having six identical bars (12) disposed in a regular geometry, the six bars (12) being disposed such that the control of the tension-compression loads in each of the six bars (12) makes it possible to control the six independent degrees of freedom in terms of forces and torques at the interface between the structure and the equipment, so as to produce effective isolation in all the degrees of freedom of the system,
**characterized in that** at least one end fitting on each bar consists of an element (16) made of elastomeric material, called elastomeric element and **in that** each axial actuator is a piezoelectric translator.

2. Device according to Claim 1, **characterized in that** said bars have a single end fitting made of elastomer, and all the end fittings are disposed on the same side, closest to the structure (10) or closest to the mounting plate (11).

3. Device according to Claim 1, **characterized in that** the two end fittings on each bar (12) consist of elastomeric elements (16).

4. Device according to any one of Claims 1 to 3, **characterized in that** the elastomeric elements (16) are dimensioned so as to provide a passive filtering function in a predetermined range of frequencies.

5. Device according to any one of Claims 1 to 4, **characterized in that** each elastomeric element (16) of each bar (12) is calculated in terms of material, shape and dimensions such that its flexural rigidities are significantly less, typically at least one order of magnitude less, than the corresponding rigidities of the rigid part of said bars.

6. Device according to any one of Claims 1 to 5, **characterized in that** these elastomeric elements (16) are in the form of a membrane in the form of a spherical cap.

7. Device according to any one of Claims 1 to 5, **characterized in that** these elastomeric elements (16) are in the form of cylindrical studs.

8. Device according to any one of Claims 1 to 7, **characterized in that** it has at least one sensor (17) for measuring the effects of disruptive loads transmitted to the structure (10).

9. Device according to Claim 8, designed for the case in which the structure (10) is intended to carry an item of disruptive equipment, **characterized in that** at least one sensor (17) measuring the effects of disruptive loads is disposed in series in the transmission path of the vibrations between the actuator (25) of the bars (12) and the structure (10).

10. Device according to Claim 9, **characterized in that** said at least one sensor (17) is a force sensor.

11. Device according to Claim 8, designed for the case in which the structure (10) is intended to carry an item of vibration-sensitive equipment, **characterized in that** at least one sensor (17) measuring the effects of disruptive loads is disposed on the mounting plate (11).

12. Device according to Claim 11, **characterized in that** said at least one sensor (17) is an accelerometer sensor.

13. Device according to any one of Claims 1 to 12, **characterized in that** it has means for limiting the translational or rotary travel of the equipment with respect to the structure (10), these means working in parallel with the hexapod.

14. Device according to any one of Claims 1 to 13, **characterized in that** it has an active control device which loops back the information measured by at least one sensor (17) to the controller of the axial actuators (25) of the bars (12).
